# EUROPÄISCHE PATENTSCHRIFT

(11) **EP 1 852 479 B1**
(45) Veröffentlichungstag und Bekanntmachung des Hinweises auf die Patenterteilung: **13.04.2016**
(21) Anmeldenummer: 07090088.1
(22) Anmeldetag: 26.04.2007
(51) Int. Cl.: C09D 163/02, C08G 59/18

(54) **VERFAHREN ZUM SCHUTZ VON DYNAMISCH BEAUFSCHLAGTEN OBERFLÄCHEN UND BESCHICHTUNG DAFÜR**
METHOD FOR PROTECTING DYNAMICALLY LOADED SURFACES AND COATING THEREFOR
PROCEDE DESTINE A LA PROTECTION DE SURFACES PRESSURISEES DE MANIERE DYNAMIQUE ET REVETEMENT

(30) Priorität: 05.05.2006 DE 102006022043
(43) Veröffentlichungstag der Anmeldung: 07.11.2007
(73) Patentinhaber: M + S Metallschutz GmbH, 15537 Erkner (DE)
(72) Erfinder: Reichert, Anton, Dr., 21035 Hamburg (DE); Meyer, Heinrich, Dipl.-Ing., 15537 Königs Wusterhausen OT Wernsdorf (DE)
(74) Vertreter: Hannig, Wolf-Dieter

(56) Entgegenhaltungen:
- DE-A1- 2 726 269
- DE-A1- 19 726 263
- DATABASE WPI Week 200609 Derwent Publications Ltd., London, GB; AN 2006-083042 XP002449488 & JP 2006 008730 A (KYOEISHA KAGAKU KK) 12. Januar 2006 (2006-01-12)
- DATABASE WPI Week 200515 Derwent Publications Ltd., London, GB; AN 2005-134773 XP002449489 & JP 2005 015572 A (CHUGOKU TORYO KK) 20. Januar 2005 (2005-01-20)

## Beschreibung

Die Erfindung betrifft ein Verfahren zum Schutz von mit abrasiven Feststoffen, aggressiven Dämpfen und Kondensaten dynamisch beaufschlagten Oberflächen aus Stahl-, Aluminium- oder Kupferblech oder Blech aus deren Legierungen, Kunststoff o. dgl., beispielsweise Abluftkanäle, bei dem auf die Oberfläche ein lösemittelfreies Gemisch aus Epoxidharz auf Bisphenol A und Bisphenol F-Basis, Glycidether als Reaktivverdünner, einem Härtungsmittel auf Basis eines Aminadduktes aus einem Polyamin und/oder aus Basisaminen mit primären, sekundären und tertiären Aminogruppen, Füllstoffen und Additiven durch Spachteln, Streichen, Rollen oder Spritzen aufgebracht und bei mindestens 15°C bis 20°C zur Reaktion gebracht wird.

### Stand der Technik

Beim Lackieren von Karosserieteilen werden bekanntlich überschüssig im Sprühnebel befindliche Partikel des Lackier- und Beschichtungsstoffes mittels Wasser ausgewaschen und die Spitzkabinenabluft durch Ventilatoren in aus Kanalabschnitten zusammengesetzte Abluftkanäle aus verzinktem Stahl- oder Edelstahlblech mit einer Dicke von 2 bis 3 mm abgeführt. Die Abluftkanäle setzen sich aus 2 bis 3. m langen Kanalsegmenten zusammen, die an ihren Stoßstellen mittels Flanschverbindungen verbunden und entsprechend abgedichtet sind.
Die feuchte Abluft strömt vor ihrem Eintritt in die Abluftkanäle zunächst an Kaskadenblechen entlang und durchströmt dann einen Keramikfilter, um den Feuchtigkeitsgehalt in der Abluft zu senken und nicht vom Wasser aufgenommene Partikel herauszufiltern. Trotz dieser Sicherheitsmaßnahmen enthält die Abluft immer noch einen erheblichen Feuchtegehalt und ist nicht frei von chemisch aggressiven Lösungsmitteln, Beizrückständen und abrasiven Feststoffen. Der pH-Wert des in der Abluft enthaltenen Kondensats pendelt zudem zwischen dem basischen und sauren Bereich, so dass die Abluftkanäle ständig unterschiedlichen chemischen und mechanischen Beanspruchungen unterworfen werden. Dies führt nach kurzer Zeit zur Zerstörung der Abluftkanäle, insbesondere werden die Flanschverbindungen und deren. Dichtungen zersetzt, wodurch Undichtigkeiten an den Abluftkanälen entstehen, die einen unkontrollierten Austritt von Kondensat zur Folge haben. Die Abluftkanäle müssen daher ständig gewartet und instand gesetzt oder sogar erneuert werden.

Aus der DE 27 26 269 A1 und der DE 27 59 744 B1 ist eine wässrige Epoxidharzemulsion und deren Verwendung für den Korrosionsschutz, insbesondere von großflächigen Stahlbauteilen, beispielsweise Stahlbrücken, Lagerbehälter, Schiffe u.a. bekannt, die aus einem flüssigen Epoxidharz auf der Basis Bisphenol A und/oder Bisphenol F, einem Reaktivverdünner auf der Basis eines Di- oder Triglycidylethers, wobei das Gewichtsverhältnis von Epoxidharz zu Reaktivverdünner 75 bis 95 zu 25 bis 5 beträgt, einem Härtungsmittel auf der Basis eines Aminadduktes aus einem Polyamin, das mindestens zwei primäre oder eine primäre und eine sekundäre Aminogruppe enthält, und einer Epoxidverbindung, üblichen Korrosionsschutzpigmenten, Füllstoffen und ggf. Hilfsmitteln besteht. Als Korrosionsschutzpigmente kommen Bleichromat, vorzugsweise Bleisilichromat und Zink-Phosphor-Oxid-Komplexe, als Füllstoffe Schwerspat, Calciumcarbonat, Magnesiumcarbonat, Calciummagnesiumcarbonat und Quarzmehl zum Einsatz.
Die Stahloberfläche wird durch Wasserstrahlen von Korrosionsrückständen oder sonstigen Verunreinigungen befreit und die nasse Stahloberfläche mit der zuvor beschriebenen wässrige Epoxidharzemulsion beschichtet.

Diese bekannte Vorbehandlung ist für dünnwandige Abluftkanäle, die beispielsweise Bestandteil einer Lackieranlage sind, nicht einsetzbar, weil einerseits das Wasserstrahlen infolge enorm hohen Wasserdruckes zur Zerstörung der Kanäle führt und andererseits Wasser in die Lackieranlage gelangen kann, was Störungen in der Lackieranlage nach sich zieht.
Des weiteren unterliegen die dünnwandigen Metallwände des Abluftkanals einer ständigen dynamischen Beanspruchung durch den anstehenden Unter- und Überdruck der mit Feststoffen und aggressiven Medien beladenen Abluft, was zum Flattern der Wände führt. Die Beschichtung wird dadurch permanent einer Wechselbeanspruchung durch Biegung ausgesetzt. Zugleich treffen die in der Abluft enthaltenen Partikel auf die Beschichtung der Innenwände des Kanals auf, wodurch ein abrasiver Abtrag des Beschichtungsmaterials entsteht, der insbesondere im Bereich der Flanschverbindungen zur Zerstörung der Flanschdichtung führt. Durch den abrasiven Angriff und die ständige dynamische Beanspruchung ist diese bekannte Beschichtung innerhalb kürzester Zeit abgetragen oder sie löst sich infolge unzureichender Haftfähigkeit vom Untergrund. Deshalb ist diese bekannte wässrige Epoxidharzbeschichtung nicht für den Schutz von Abluftkanälen geeignet.

Aus der DE 197 26 263 A1 ist ein Zweikomponenten-Beschichtungsmittel auf Epoxidharz-Basis für zementgebundene Untergründe bekannt, dessen Harzkomponente A aus 16 bis 80 Gew.-% eines Epoxidharzes, bis zu 30 Gew.-% eines Reaktivverdünners, bis zu 70% eines Füllstoffes sowie bis 20 Gew.-% an sonstigen Zusätzen wie Pigmente, Additive und Extender und dessen Härterkomponente aus 20 bis 50 Gew.-% m-Xylylendiamin, bis zu 40 Gew.-% eines Adduktierharzes, bis 50 Gew.-% eines Extenders sowie bis 10 Gew.-% eines Beschleunigers enthält, wobei die Komponenten A und B im Molverhältnis 1:0,8 bis 1:2 vorliegen.
Dieses bekannte Beschichtungssystem kommt für Industrieböden, Lager- und Verkehrsflächen zum Einsatz und erreicht Schichtdicken von bis zu 50 mm. Bereits die als vorteilhaft herausgestellten Dicken von 2000 bis 4000 µm dieses bekannten Beschichtungsmittels erreichen Flächengewichte, die für einen Einsatz an dünnwandigen Metallblechen zu einer unverhältnismäßig hohen Flächenlast des Abluftkanals führen und daher ebenso nicht für Abluftkanäle in Betracht kommen. Außerdem erfordert auch diese bekannte Beschichtung eine auf die Natur und die Art des Untergrundes entsprechend angepasste Vorbehandlung.

### Aufgabenstellung

Bei diesem Stand der Technik liegt der Erfindung die Aufgabe zugrunde, ein Verfahren und eine Beschichtung zum Schutz von dünnwandigen Oberflächen zur Verfügung zustellen, die weitgehend ohne Vorbehandlung der metallischen Oberflächen auskommen und ein geringes Flächengewicht für die Beschichtung bei hoher dynamischer, chemischer und abrasiver Beanspruchung trotz weitgehender Lösemittel- und Wasserfreiheit kostengünstig erreichen.

Diese Aufgabe wird durch ein Verfahren der eingangs genannten Gattung mit den kennzeichnenden Merkmalen der Ansprüche 1 und 8 und durch eine Beschichtung mit den Merkmalen der Ansprüche 17 und 23 gelöst.

Vorteilhafte Ausgestaltungen der erfindungsgemäßen Verfahren und der Beschichtung sind den Unteransprüchen entnehmbar.

Die erfindungsgemäße Lösung zeichnet sich durch ein Verfahren aus, dessen Beschichtungsmittel mit dem verarbeitungsbedingten Ölfilm auf der Metalloberfläche ein gemeinsames Schutzsystem mit einem geringen Flächengewicht bildet, das eine außerordentlich hohe Haftfestigkeit am Untergrund trotz permanenter dynamischer Beanspruchung mit hohem Verschleißwiderstand und chemischer Beständigkeit kombiniert, wodurch dünnwandige Metallteile eine exzellente Resistenz gegen mit abrasiven Feststoffen, aggressiven Dämpfe und Kondensaten beladene Abluft erreichen.

Das Schutzsystem besitzt eine exzellente Haftfähigkeit auch bei verarbeitungsbedingt veröltem Untergrund von bis zu 11,0 N/mm². Selbst durch Hochdruckstrahlen mit Kaltwasser bei Drücken von bis zu 1600 bar gelingt es nicht, das Schutzsystem abzutragen oder zu unterwandern.

Von besonderem Vorteil ist, dass mit dem erfindungsgemäßen Verfahren ein abriebfestes, chemisch beständiges, hoch haftfähiges und zugleich bis zu 25 kV elektrisch durchschlagsicheres System erzeugbar ist, welches den besonderen komplexen Einsatzbedingungen in dynamisch beanspruchten Metallflächen, beispielsweise Abluftkanäle von Lackieranlagen, vollumfänglich gerecht wird.

Die überragenden mechanischen, chemischen und elektrischen Eigenschaften des 350 bis 600 µm dicken Einstoffsystems resultieren aus der überraschenden Kombination eines auf der Metalloberfläche nicht entfernten Ölfilms mit einem lösemittelfreien Gemisches aus Epoxidharzgemischen, Additiv- und Füllstoffgemischen, wobei in der Rezeptur gegenüber den. Stand der Technik auf eine Lösemittelzugabe und Zugaben auf wasserbasierenden und damit diffusionsoffenen, nicht volumenkonstanten Inhaltsstoffen verzichtet wird.

Die hohe elektrische Durchschlagsicherheit des Schutzsystems ermöglicht es, die Lebensdauer von Tauchbecken für die kathodische Tauchlackierung erheblich zu verlängern. Auch bei dynamischer Beanspruchung des Ein- oder Zweischichtsystems bleiben die hervorragenden mechanischen, chemischen und elektrischen Eigenschaften erhalten.

Weitere Vorteile und Einzelheiten ergeben sich aus der nachfolgenden Beschreibung.

### Ausführungsbeispiel

Die Erfindung soll nachstehend an zwei Ausführüngsbeispielen näher erläutert werden.

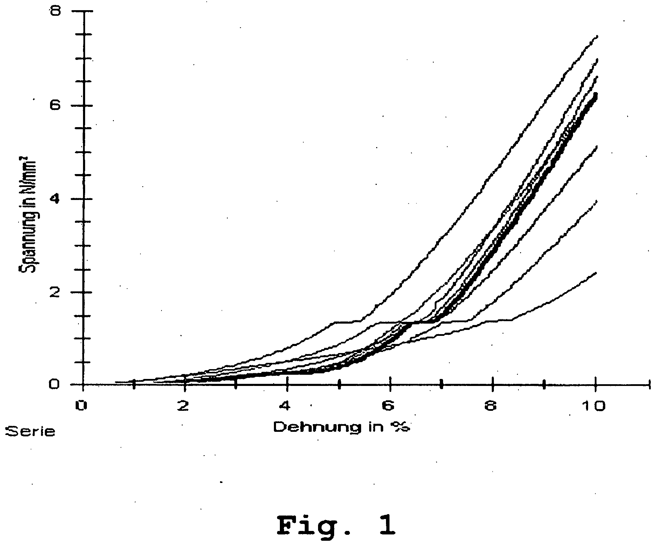

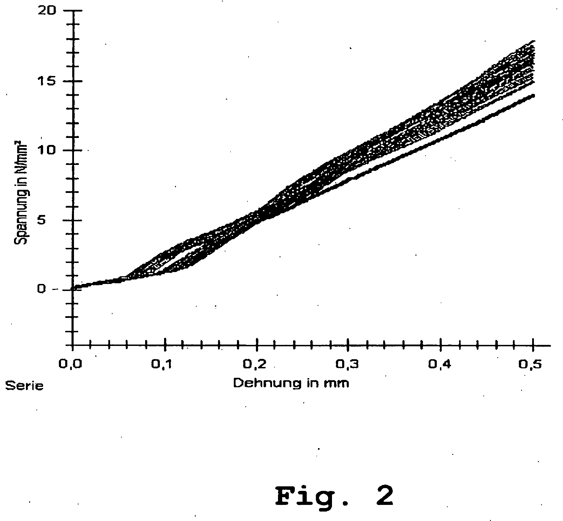

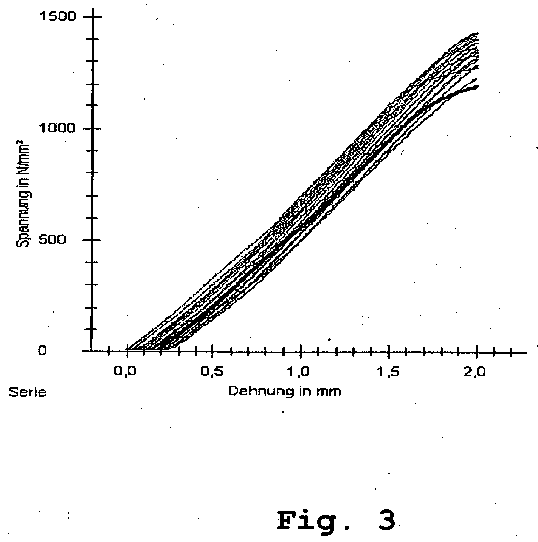

Die Fig. 1 bis 3 zeigen mechanische Eigenschaften des erfindungsgemäßen Schutzsystems.

### Beispiel 1:

Mit dem erfindungsgemäßen Verfahren soll auf die innere Oberfläche eines aus 2 mm dicken verzinktem Stahlblech bestehenden Abluftkanals mittels einer Zweikomponenten-Spritzanlage ein Schutzsystem aus einem einlagigen Schutzsystem mit einer Schichtdicke von 400 µm ohne irgendeine Vorbereitung der Oberfläche aufgebracht werden.
Die Oberfläche, des Stahlblechs ist verarbeitungsbedingt beidseitig mit einem dünnen Film aus anhaftenden Öl von geringer Dicke beschichtet. Der aufgebrachte Ölfilm besteht regelmäßig aus leichtem Mineralöl mit KohlenwasserstoffKetten unterschiedlicher Länge. Die Beschichtungsmenge beträgt ca. 0,7 g/m² bei leichter Verölunng und 1,2 g/m² bei üblicher Verölung. Dies entspricht etwa einer Ölschichtdicke von ungefähr 0,09 bis 0,15 µm. Der mittlere Rauwert Ra der zu beschichtenden Oberfläche erreicht Werte von 0,6 bis 1,9 µm.

Bei der Ausführung des erfindungsgemäßen Verfahrens kommt eine Formulierung zur Anwendung, die sich aus den nachfolgend näher beschriebenen Komponenten A und B zusammensetzt.
Die Komponente A enthält 31,0 Ges.-% Bisphenol A-(epichlorhydrin) mit einem mittleren Molekulargewicht von ≤700, 11,0 Gew.-% Bisphenol F- (epichlorhydrin) mit einem mittleren Molekulargewicht ≤700, 3,0 Gew.-% Epoxidharz (A/F)addukt mit Phenolharz, 14,0 Gew.-% 6-hexanedioldiglycidether, 3,0 Gew.-% p-tert-Butylphenylglycidylether,1,0 Gew.-% Polypropylenglykoldiglycidether, 18,0 Gew.-% Quarzmehl, 3,0 Gew.-% Chlorit-Quarz-Glimmer, 5,0 Gew.-%` Magnesiumsilikat, 2,0 Gew.-% Magnesiumaluminiumsilikat, 4,0 Gew.-% amorphes Magnesiumsilikathydrat, 2,4 Gew.-% Titandioxid, 0,3 Gew.-% hochdisperse Kieselsäure, 0,7 Gew.-% unbehandelte pyrogene Kieselsäure, 0,1 Gew.-% quaternäre Ammoniumverbindung, 0,5 Gew.-% silikonfreie schaumzerstörende Polymere, 0,2 Gew.-% polyethermodifiziertes Copolymer, 0,1 Gew.-% Dispergieradditiv und 0,7 Gew.-% Benetzungsadditiv.

Die Komponente B beinhaltet als Härter 2,4 Gew.-% eines Adduktes aus Aminen mit Phenolharzen, 8,5 Gew.-% Benzylalkohol, 9,6 Gew.-% Isophorondiamin, 0,8 Gew.-% 3,6-diazaoctanethylendiamin, 0,2 Gew.-% N,N- Dimethyl-1,3-diaminoropan, 0,3 Gew.-% 4,4'-Isopropylidenediphenol, 0,1 Gew.-% 2-piperazin-1-ylethylamin, 2,4 Gew.-% Polyaminoamid, 0,9 Gew.-% p-tert-Butylphenol, 0,4 Gew.-% Trimethylhexamethylendiamin, als Füllstoffe 45,6 Gew.-% Quarzmehl, 15 Gew.-% Magnesiumsilikat, 8 Gew.-% Chlorit-Quarz-Glimmer und 1 Gew.-% Magnesiumaluminiumsilikat und als Additive 0,3 Gew.-% hochdisperse Kieselsäure, 0,5 Gew.-% silikonfreie, schaumzerstörende Polymere, 1,1 Gew.-% unbehandelte pyrogene Kieselsäure, 0,5 Gew.-% Dispergieradditiv und 2,4 Gew.-% Benetzungsadditiv.

Das Mischungsverhältnis von Komponente A zu B für das aufzubringende Gemisch beträgt 1:1 Volumenteile. Das so formulierte Gemisch wird auf die leicht verölte innere Metallfläche des Abluftkanals gleichmäßig bis zu einer Dicke von 400 µm aufgespritzt und dort zur Reaktion gebracht.
Es bildet mit dem auf der Metallfläche abgeschiedenen Ölfilm eine innige gemeinsame Schicht, bei der völlig überraschend die Bestandteile des Öls während der Reaktionsphase in die Polymermatrix eingebaut und gebunden werden. Dadurch kann das Öl auf der Oberfläche nicht mehr trennend wirken, sondern es entsteht ein unmittelbarer Haftkontakt zur Metalloberfläche. Die Harz-Härter-Kombination bewirkt darüber hinaus mit ihrem Polyamino-Bestandteilen eine Kontakthaftung auch zu nichtporigen Oberflächen. Die zugegebenen Additive erzielen eine Herabsetzung der Oberflächenspannung, so dass eine effektive Wechselwirkung zwischen dem Schutzsystem und der Metalloberfläche stattfinden kann. Nicht in die Polymermatrix eingebundene Gruppen wie Aminogruppen aus der Härterformulierung oder Oxirangruppen aus dem Epoxidharz bzw. den Reaktivverdünnern bewirken ebenso eine Wechselwirkung zur Metalloberfläche. Diese verschiedenen Effekte wirken synergistisch zusammen und führen zu der völlig überraschenden Eigenschaft einer nicht für möglich gehaltenen Haftfestigkeit auf verölten Metalloberflächen. Es können die aufwändigen Entfettungsarbeiten und eine weitere Oberflächenvorbereitungen entfallen.
Durch die Kombination von Öl mit dem formulierten Gemisch entsteht ein einlagiges Schutzsystem, das trotz seiner geringen Auftragsdicke von nur 400 µm bei ursprünglich beibehaltener Rauheit der Metalloberfläche eine äußerst hohe Haftfestigkeit zwischen 7,0 und 11,0 N/mm² unter dynamischer Beanspruchung, hohe Chemiekalienbeständigkeit und Abriebfestigkeit erreicht.

Die Fig. 1 bis 3 zeigen Beispiele der erreichten mechanischen Eigenschaften des nach dem erfindungsgemäßen Verfahren erzeugten einlagigen Schutzsystems aus Haftscher-, Stauch- und Biegeversuchen.

Hochdruckstrahlversuche mit Kaltwasser bei Druck zwischen 150 und 1600 bar ergaben selbst bei rotierendem Wasserstrahl kein Hinterwandern des aufgetragenen einlagigen Schutzsystems.

Das einlagige Schutzsystem ist gegenüber Säuren, beispielsweise Salzsäure, Schwefelsäure Phosphorsäure, Essigsäure, Laugen wie Natronlauge, Lösungsmittel beispielsweise Benzin, Butylacetat, Butyldiglykolacetat, i-Propanol, Toluol sicher beständig.

Hochspannungsisolationsprüfungen am erfindungsgemäßen Schutzsystem haben über den gesamten geprüften Oberflächenbereich eine Durchschlagsicherheit bis mindestens 25 kV auch bei Einwirkung von elektrolytischen Flüssigkeiten ergeben.

### Beispiel 2

Auf die leicht verölte, innere Oberfläche eines Abluftkanals aus verzinktem Stahlblech soll mit dem erfindungsgemäßen Verfahren ein zweilagiges Schutzsystem nacheinander durch Rollen aufgebracht werden.
Das zweilagige Schutzsystem umfasst als erste Lage eine elastische Haftschicht, die auf die Oberfläche des unbehandelten, leicht verölten verzinkten Stahlblechs aufgetragen wird. Die Dicke der ersten Lage soll mindestens 300 µm betragen. Die Formulierung für die erste Lage besteht aus zwei Komponenten, C1 und D1, die nachfolgend näher erläutert werden.

Die Ausgangsmaterialien für die Komponente C1 sind: ein Epoxidharzgemisch aus 23,0 Gew.-% eines aus Bisphenol-A-(epichlorhydrin) und 9,0 Gew.-% Bisphenol-F-(epichlrohydrin) jeweils mit einem mittleren Molekulargewicht ≤700, 0,8 Gew.-% Propylencarbonat, ein Verdünnergemisch aus 8,0 Gew.-% 1,6-hexane-dioldiglycidether, 3,0 Gew.-% Glycidylether, ein Füllstoffgemisch aus 25,1 Gew.-% Quarzmehl, 3,0 Gew.-% Chlorit-Quarz-Glimmer, 10,0 Gew.-% Magnesiumsilikate, 3,0 Gew.-% Magnesiumaluminiumsilikat und 10,0 Gew.-% Titandioxid und ein Additivgemisch aus 0,5 Gew.-% hochdisperse Kieselsäure, 2,0 Gew.-% unbehandelte pyrogene Kieselsäure, 1,5 Gew.-% quaternäre Ammoniumverbindung, 0,2 Gew.-% silikonfreie Lösung schaumzerstörender Polymere, 0,4 Gew.-% polyethermodifiziertes Copolymer, 0,2 Gew.-% Dispergieradditiv und 0,3 Gew.-% Benetzungsadditiv.

Die Komponente D1 umfasst eine Formulierung aus 2,4,6-Tri-(dimethylaminomethylphenol), 9,5 Gew.-% Benzylalkohol, 9,5 Gew.-% Isophorondiamin, 3,6-diazaoctanethylenediamin, 2,4 Gew.-% N,N-Dimethyl-1,3-diaminoropan, 25,0 Gew.-% 2-piperazin-1-ylethylamine, 10,0 Gew.-% Polyetheramin, 2,3 Gew.-% m-Xylilendiamin, 25,0 Gew.-% Polyaminoamid, 2,1 Gew.-% p-tert-Butylphenol, 2,0 Gew.-% Trimethylhexamethylendiamin, 0,5 Gew.-% silikonfreie schaumzerstörende Polymere, 0,2 Gew.-% Benetzungsadditiv und 6,7 Gew.-% eines Adduktes aus Aminen mit Phenolharzen.

Das Mischungsverhältnis der Komponenten C1 zu D1 beträgt 5 : 1 Gewichtsteile. Das so vorbereitete Gemisch wird bei Temperaturen von 20° C mittels Rollen auf die leicht verölte Metalloberfläche aufgetragen und zur Reaktion gebracht. Die Kohlenstoffverbindungen der Ölschicht werden vom Gemisch aufgenommen und gebunden, so dass eine gemeinsame Haftbrücke zur Metalloberfläche erhalten wird, die insbesondere bei flatternden bzw. ein- oder ausbeulenden Wänden der Abluftkanäle eine ausgezeichnete Haftfestigkeit erreicht. Die erzielte Haftfestigkeit betrug durchschnittlich 7,63 N/mm².

Nach Aushärtung der ersten Lage bzw. Haftbrücke wird die zweite Lage als Versiegelungsschicht in einer Dicke von 150 µm auf die erste Lage ebenfalls durch Rollen aufgetragen.

Die Formulierung der chemisch beständigen und abrasiv Widerstandsfähigen Siegelschicht besteht ebenso wie die Haftschicht aus zwei Komponenten, C2 und D2.
Die Komponente C2 enthält ein Epoxidharzgemisch aus 55,0 Gew.-% eines aus Bisphenol-A- (epichlorhydrin) und 24,0 Gew.-% Bisphenol-F-(epichlrohydrin) jeweils mit einem mittleren Molekulargewicht ≤9700, ein Verdünnergemisch aus 4,9. Gew.-% Glycidether, 12,0 Ges.-% p-tert-Butylphenylglycidether, 3,0 Gew.-% Polypropylenglykoldiglycidether und ein Additivgemisch aus 0,2 Gew.-% silikonfreie schaumzerstörende Polymere, 0,6 Gew.-% polyethermodifiziertes Copolymer, 0,3 Gew.-% Benetzungsadditiv.

Die Komponente D2 beinhaltet 14,0 Gew.-% Benzylalkohol, 20,0 Gew.-% Isophorondiamin, 8,0 Gew.-% 3,6-diazaoctanethylenediamin, 23,4 Gew.-% m-Xylilendiamin, 9,0 Gew.-% Polyetheramin, 8,0 Gew.-% 4,4'-Isopropylidenediphenol, 2,4 Gew.-% p-tert-Butylphenol, 2,0 Gew.-% Salicylsäure, 9,0 Gew.-% Trimethylhexamethylendiamin, 4,0 Gew.-% adduktierter epoxidgruppenhaltiger Ester und 0,2 Gew.-% Benetzungsadditiv.

Das Mischungsverhältnis, der Komponenten C zu D beträgt 2 : 1 Volumenteile.

Die Siegelschicht zeigt selbst nach zweimonatigem Rühren mit Quarzsand mit einer Körnung von 0,1 bis 0,3 mm in Phosphatierlösung bei 60 bis 70 °C keinen nennenswerten Abrieb, wobei sogar der Glanz der Schicht erhalten bleibt.

Die mechanischen, chemischen und elektrischen Eigenschaften entsprachen denen des Beispiels 1.

Das mit erfindungsgemäßen Verfahren aufgebrachte Schutzsystem erfordert einen geringen Wartungsaufwand, lässt sich nutzerfreundlich reinigen und ist gegenüber bekannten Werkstoffen stärker belastbar. Es besitzt eine lange Lebensdauer, ohne dass sich die Eigenschaften wesentlich ändern.

Das Schutzsystem ist einfach verarbeitbar und lässt sich problemlos je nach den Erfordernissen durch Spachteln, Streichen, Rollen oder Spritzen auf die zu schützenden Oberflächen aufbringen. Der Untergrund sollte frei von losen oder trennend wirkenden Substanzen wie Rost oder sonstige Anlaufschichten sein. Die optimalen Verarbeitungstemperaturen liegen bei 20° C.

Mit dem erfindungsgemäßen Schutzsystem ist es möglich, hochwertige Edelstahlbleche wie V2A bzw. V4A, Aluminium- oder Kupferbleche oder Bleche aus deren Legierungen durch verzinkten oder feueraluminierten unlegierten Stahl zu ersetzen. Anwendungen findet das erfindungsgemäße Schutzsystem vor allem im Anlagenbau, beispielsweise in Lüftungskanälen für Lackieranlagen, die nach dem Sprühverfahren arbeiten.
Weitere Einsatzgebiete des erfindungsgemäßen Schichtsystems sind der Schutz von dynamisch beanspruchten Metallteilen vor chemisch aggressiven und/oder abrasiven Medien in bestehenden Anlagen, deren Sanierung und Abdichtung.

Die exzellenten elektrischen Eigenschaften des erfindungsgemäßen Schutzsystems ermöglichten des Weiteren den Einsatz als Beschichtungsmasse zum Schutz von metallischen Behältern, beispielsweise Tauchbecken für die kathodische Tauchlackierung, oder den Einsatz als Metallklebstoff.

## Patentansprüche

1. Verfahren zum Schutz von mit abrasiven Feststoffen, aggressiven Dämpfen und Kondensaten dynamisch beaufschlagten Oberflächen aus Stahl-, Aluminium- oder Kupferblech oder Blech aus deren Legierungen, Kunststoff o. dgl., beispielsweise Abluftkanäle, bei dem auf die Oberfläche ein lösemittelfreies Gemisch aus Epoxidharz auf Bisphenol A Bisphenol F-Basis, Glycidether als Reaktivverdünner, einem Härtungsmittel auf Basis eines Aminadduktes aus einem Polyamin und/oder aus Basisaminen mit primären, sekundären und tertiären Aminogruppen, Füllstoffen und Additiven durch Spachteln, Streichen, Rollen oder Spritzen aufgebracht und bei mindestens 15°C bis 20°C zur Reaktion gebracht wird, **gekennzeichnet durch** folgende Schritte:
a) Auftragen einer einzigen Lage des Gemisches in Dicken zwischen 250 bis 600 µm auf eine mit einem Ölfilm versehene unvorbereitete Oberfläche,
b) Aufnehmen der Bestandteile des Öls **durch** das Gemisch,
c) Reaktion des Gemisches mit den ölbestandteilen zu einem einlagigen dynamisch beanspruchbaren, abriebfesten, chemisch-widerstandsfähigen und elektrisch durchschlagsicheren Schutzsystem mit einer Haftfestigkeit von mindestens 7,0 bis 11,0 N/mm² auf der Oberfläche.

2. Verfahren nach Anspruch 1, **dadurch gekennzeichnet, dass** ein Gemisch aus 1,0 bis 70,0 Gew.-% Epoxidharz, 1 bis 50 Gew.-% Reaktivverdünner, 3,0 bis 70,0 Gew.-% Füllstoff und 0,1 bis 5,0 Gew.-% Additive als Komponente A und 5,0 bis 99 Gew.-% Härtungsmittel sowie 0,1 bis 5,0 Gew.-% Additive als Komponente B verwendet wird.

3. Verfahren nach Anspruch 2, **dadurch gekennzeichnet, dass** als Komponente A 1,0 bis 50,0 Gew.-% Bisphenol A-(epichlorhydrin) mit einem mittleren Molekulargewicht ≤ 700, 1,0 bis 50,0 Gew.-% Bisphenol F-(epichlorhydrin) mit einem mittleren Molekulargewicht ≤ 700, 0,1 bis 10,0 Gew.-% Epoxidharz (A/F) addukt mit Phenolharz, 1,0 bis 29,0 GeW.-% 6-hexanedioldiglycidether, 1,0 bis 20,0 Gew.-% p-tert-Butylphenolglycidylether, 1,0 bis 20,0 Gew.-% Polypropylenglykoldiglycidether, 5,0 bis 70,0 Gew.-% Füllstoff und 0,1 bis 5,0 Gew.-% Additive verwendet wird.

4. Verfahren nach Anspruch 2, **dadurch gekennzeichnet, dass** als Komponente B 1,0 bis 29,0 Gew.-% Benzylalkohol, 1,0 bis 29,0 Gew.-% Isophorondiamin, 0,1 bis 5,0 Gew.-% 3,6-diazaoctamethylendiamin, 0,1 bis 5,0 Gew.-% 4,4'-isopropylidenediphenol, 0,1 bis 5,0 Gew.-% 2-piperazin-1-ylethylamine, 0,1 bis 5,0 Gew.-% Polyaminoamid, 0,1 bis 5,0 p-tert-Butylphenol, 0,1 bis 10,0 Gew.-% Salicylsäure, und 0,1 bis 5,0 Gew.-% Additive verwendet wird.

5. Verfahren nach Anspruch 1 bis 4, **dadurch gekennzeichnet, dass** als Füllstoff ausschließlich Quarz und/oder ein Gemisch aus Quarzmehl, Magnesiumsilikat, Chlorit-Quarz-Glimmer, Magnesiumaluminiumsilikat und Titandioxid verwendet wird, wobei der Anteil des Quarzmehls an der Füllstoffmenge maximal 65% und der Anteil des Magnesiumssilikats an der Füllstoffmenge maximal 22% beträgt.

6. Verfahren nach Anspruch 1 bis 5, **dadurch gekennzeichnet, dass** ein Mischungsverhältnis der Komponente A zu Komponente B von 1 : 1 bis 5 : 1 Volumenteile eingestellt wird.

7. Verfahren nach Anspruch 1 bis 5, **dadurch gekennzeichnet, dass** weitgehend lösemittel- und wasserfreie Additive verwendet werden.

8. Verfahren zum Schutz von mit abrasiven Feststoffen, aggressiven Dämpfen und Kondensaten dynamisch beaufschlagten Oberflächen aus Stahl-, Aluminium- oder Kupferblech oder Blech aus deren Legierungen, Kunststoff o. dgl., beispielsweise Abluftkanäle, bei dem auf die Oberfläche ein lösemittelfreies Gemisch aus Epoxidharz auf Bisphenol A und Bisphenol F-Basis, Glycidether als Reaktivverdünner, einem Härtungsmittel auf Basis eines Aminadduktes aus einem Polyamin und/oder aus Basisaminen mit primären, sekundären und tertiären Aminogruppen, Füllstoffen und Additiven durch Spachteln, Streichen, Rollen oder Spritzen aufgebracht und bei mindestens 15 °C bis 20°C zur Reaktion gebracht wird, **gekennzeichnet durch** folgende Schritte:
a) Auftragen einer ersten Lage aus einem ersten Gemisch mit einer Schichtdicke von 250 µm bis 350 µm auf eine mit einem Ölfilm versehene unvorbereitete Oberfläche,
b) Aufnehmen der Bestandteile des Öls in das Gemisch der ersten Lage,
c) Ausbilden einer elastischen Haftbrücke **durch** Reaktion des ersten Gemisches mit den Ölbestandteilen zu einem ersten Schutzsystem mit einer Haftfestigkeit von mindestens 7,0 bis 11,0 N/mm² auf der Oberfläche,
d) Auftragen einer zweiten Lage aus einem zweiten Gemisch in einer Schichtdicke von 100 µm bis 250 µm auf die erste Lage gemäß Schritt a) und
e) Reaktion des Gemisches der zweiten Lage zu einem zweiten Schutzsystem als eine dynamisch beanspruchbare, abriebfeste, chemisch widerstandsfeste und elektrisch durchschlagsichere Siegelschicht.

9. Verfahren nach Anspruch 8, **dadurch gekennzeichnet, dass** für die erste Lage 5,0 bis 60 Gew.-%. Epoxidharz, 1,0 bis 25,0 Gew.-% Reaktivverdünner, 5,0 bis 80,0 Gew.-% Füllstoffe und 0,1 bis 5,0 Gew.-% Additive als Komponente C sowie 10,0 bis 95,0 Gew.-% Härtungsmittel, 1,0 bis 50,0 Gew.-% Füllstoffe und 0,1 bis 5,0 Gew.-% Additive als Komponente D, bezogen auf die fertige Haftbrücke, verwendet wird.

10. Verfahren nach Anspruch 8, **dadurch gekennzeichnet, dass** für die zweite Lage 5,0 bis 90,0 Gew.-% Epoxidharz, 1,0 bis 50,0 Gew.-% Reaktivverdünner, bis zu 50,0 Gew.-% Füllstoffe und 0,1 bis 5,0 Gew.-% Additive als Komponente C sowie 10,0 bis 50,0 Gew.-% Härtungsmittel, bis zu 50,0 Gew.-% Füllstoffe und 0,1 bis 5,0 Gew.-% Additive als Komponente D, bezogen auf die fertige Siegelschicht, verwendet wird.

11. Verfahren nach Anspruch 10, **dadurch gekennzeichnet, dass** als Komponente C 55 Gew.-% Bisphenol A-(epichlorhydrin) mit einem mittleren Molekulargewicht ≤ 700, 24,0 Gew.-% Bisphenol F-(epichlorhydrin) mit einem mittleren Molekulargewicht ≤ 700, 4,9 Gew.-% Glycidether, 12,0 Gew.-% p-tert-Butylphenolglycidylether, 3,0 Gew.-% Polypropylenglykoldiglycidether, 0,2 Gew.-% silikonfreie schaumzerstörendes Polymere, 0,6 Gew.-% polyethermodifiziertes Copolymer und 0,3 Gew.-% Benetzungsadditiv verwendet wird.

12. Verfahren nach Anspruch 10, **dadurch gekennzeichnet, dass** als Komponente D 14,0 Gew.-% Benzylalkohol, 20,0 Gew.-% Isophorondiamin, 8,0 Ges.-% 3,6-diazaoctamethylendiamin, 23,4 Ges.-% m-Xylilendiamin, 9,0 Ges.-% Polyetheramin, 8,0 Ges.-% 4,4'-isopropylidenediphenol, 2,4 Gew.-% p-tert-Butylphenol, 9,0 Gew.-% Trimethylhexamethylendiamin, 4,0 Gew.-% adduktierter epoxidgruppenhaltiger Ester und 0,2 Gew.-% Benetzungsadditiv verwendet wird.

13. Verfahren nach Anspruch 8 bis 10, **dadurch gekennzeichnet, dass** als Füllstoffe der ersten Lage ausschließlich Quarzmehl und/oder ein Gemisch aus Quarzmehl mit Magnesiumsilikat, Chlorit-Quarz-Glimmer, Magnesiumaluminium-silikat und Titandioxid verwendet wird, wobei der Anteil des Quarzmehls an der Füllstoffmenge in der Haftbrücke maximal 80% und der Anteil des Magnesiumssilikats maximal 30% beträgt.

14. Verfahren nach Anspruch 8 bis 10, **dadurch gekennzeichnet, dass** als Füllstoffe der zweiten Lage ausschließlich Quarzmehl und/oder ein Gemisch aus Quarzmehl mit Magnesiumsilikat, Chlorit-Quarz-Glimmer und Magnesiumaluminiumsilikat verwendet wird, wobei der Anteil des Quarzmehls an der Füllstoffmenge in der Siegelschicht maximal 50% und der Anteil des Magnesiumsilikats maximal 30% beträgt.

15. Verfahren nach Anspruch 8 bis 14, **dadurch gekennzeichnet, dass** das Mischungsverhältnis von Komponente C zu Komponente D zwischen 2 : 1 und 8 : 1 Volumenteilen eingestellt wird.

16. Verfahren nach Anspruch 8 bis 12, **dadurch gekennzeichnet, dass** weitgehend Lösemittel- und wasserfreie Additive verwendet werden.

17. Beschichtung für von mit abrasiven Feststoffen, aggressiven Dämpfen und Kondensaten dynamisch beaufschlagten Oberflächen aus Stahl-, Aluminium- oder Kupferblech oder Blech aus deren Legierungen, Kunststoff o. dgl., beispielsweise Abluftkanäle, mit einem durch Spachteln, Streichen, Rollen oder Spritzen auf eine mit einem Ölfilm versehene, unvorbereitete Metalloberfläche aufgebrachten. Gemisch aus Epoxidharz auf Bisphenol A und Bisphenol F-Basis, Glycidether als Reaktivverdünner, einem Härtungsmittel auf Basis eines Aminadduktes aus einem Polyamin und/oder aus Basisaminen mit primären, sekundären und tertiären Aminogruppen, Füllstoffen und Additiven, **dadurch gekennzeichnet, dass** die Beschichtung aus einer die Bestandteile des Öls des Ölfilms bindenden Lage aus 1,0 bis 70,0 Gew.-% Epoxidharz, 1 bis 50 Gew.-% Reaktivverdünner, 3,0 bis 70,0 Gew.-% Füllstoff und 0,1 bis 5,0 Gew.-% Additive als Komponente A und 5,0 bis 99 Gew.-% Härtungsmittel sowie 0,1 bis 5,0 Gew.-% Additive als Komponente B besteht.

18. Beschichtung nach Anspruch 17, **dadurch gekennzeichnet, dass** die Komponente A 1,0 bis 50,0 Gew.-% Bisphenol A-(epichlorhydrin) mit einem mittleren Molekulargewicht ≤ 700, 1,0 bis 50,0 Gew.-% Bisphenol F-(epichlorhydrin) mit einem mittleren Molekulargewicht ≤ 700, 0,1 bis 10,0 Gew.-% Epoxidharz (A/F) addukt mit Phenolharz 1,0 bis 29,0 Gew.-% 6-hexanedioldiglycidether, 1,0 bis 20,0 Gew.-% p-tert-Butylphenolglycidylether, 1,0 bis 20,0 Gew.-% Polypropylenglykoldiglycidether, 5,0 bis 70,0 Gew.-% Füllstoff und 0,1 bis 5,0 Gew.-% Additive enthält.

19. Beschichtung nach Anspruch 17, **dadurch gekennzeichnet, dass** die Komponente B 1,0 bis 29,0 Gew.-% Benzylalkohol, 1,0 bis 29,0 Gew.-% Isophorondiamin, 0,1 bis 5,0 Gew.-% 3,6-diazaoctamethylendiamin, 0,1 bis 5,0 Gew.-% 4,4'-isopropylidenediphenol, 0,1 bis 5,0 Gew.-% 2-piperazin-1-ylethylamine, 0,1 bis 5,0 Gew.-% Polyaminoamid, 0,1 bis 5,0 p-tert-Butylphenol, 0,1 bis 10,0 Gew.-% Salicylsäure, und 0,1 bis 5,0 Gew.-% Additive enthält.

20. Beschichtung nach Anspruch 17 bis 19, **dadurch gekennzeichne**t, dass der Füllstoff ausschließlich aus Quarz und/oder einem Gemisch aus Quarzmehl, Magnesiumsilikat, Chlorit-Quarz-Glimmer, Magnesiumaluminiumsilikat und Titandioxid besteht, wobei der Anteil des Quarzmehls an der Füllstoffmenge maximal 65% und der Anteil des Magnesiumssilikats an der Füllstoffmenge maximal 22% beträgt.

21. Beschichtung nach Anspruch 17 bis 19, **dadurch gekennzeichnet, dass** die Additive weitgehend lösemittel- und wasserfrei sind.

22. Beschichtung nach Anspruch 17 bis 19, **dadurch gekennzeichnet, dass** die Additive weitgehend lösemittel- und wasserfrei sind.

23. Beschichtung für von mit abrasiven Feststoffen, aggressiven Dämpfen und Kondensaten dynamisch beaufschlagten Oberflächen aus Stahl-, Aluminium- oder Kupferblech oder Blech aus deren Legierungen, Kunststoff o. dgl., beispielsweise Abluftkanäle, mit einem durch Spachteln, Streichen, Rollen oder Spritzen auf eine leicht verölte unvorbereitete Metalloberfläche aufgebrachten Gemisch aus Epoxidharz auf Bisphenol A und Bisphenol F-Basis, Glycidether als Reaktivverdünner, einem Härtungsmittel auf Basis eines Aminadduktes aus einem Polyamin und/oder aus Basisaminen mit primären, sekundären und tertiären Aminogruppen, Füllstoffen und Additiven, **dadurch gekennzeichnet, dass** die Beschichtung mindestens zwei Lagen umfasst, von denen die erste Lage als eine die Bestandteile der Ölschicht bindenden elastischen Haftbrücke als erstes Schutzsystem aus 5,0 bis 60 Gew.-% Epoxidharz, 1,0 bis 25,0 Gew.-% Reaktivverdünner, 5,0 bis 80,0 Gew.-% Füllstoffe und 0,1 bis 5,0 Gew.-% Additive als Komponente C sowie 10,0 bis 95,0 Gew.-% Härtungsmittel, 1,0 bis 50,0 Gew.-% Füllstoffe und 0,1 bis 5,0 Gew.-% Additive als Komponente D, bezogen auf die fertige Haftbrücke, und die zweite Lage in Form einer Siegelschicht als zweites Schutzsystem aus 5,0 bis 90,0 Gew.-% Epoxidharz, 1,0 bis 50,0 Gew.-% Reaktivverdünner, bis
zu 50,0 Gew.-% Füllstoffe und 0,1 bis 5,0 Gew.-% Additive als Komponente C sowie 10,0 bis 50,0 Gew.-% Härtungsmittel, bis zu 50,0 Gew.-% Füllstoffe und 0,1 bis 5,0 Gew.-% Additive als Komponente D, bezogen auf die fertige Siegelschicht, gebildet ist.

24. Beschichtung nach Anspruch 23, **dadurch gekennzeichnet, dass** die Komponente C 55 Gew.-% Bisphenol A-(epichlorhydrin) mit einem mittleren Molekulargewicht ≤ 700, 24,0 Gew.-% Bisphenol F-(epichlorhydrin) mit einem mittleren Molekulargewicht ≤ 700, 4,9 Gew.-% Glycidether, 12,0 Gew.-% p-tert-Butylphenolglycidylether, 3,0 Gew.-% Polypropylenglykoldiglycidether, 0,2 Gew.-% silikonfreie schaumzerstörendes Polymere, 0,6 Gew.-% polyethermodifiziertes Copolymer und 0,3 Gew.-% Benetzungsadditiv enthält.

25. Beschichtung nach Anspruch 23, **dadurch gekennzeichnet, dass** die Komponente D 14,0 Gew.-% Benzylalkohol, 20,0 Gew.-% Isophorondiamin, 8,0 Gew.-% 3,6-diazaoctamethylendiamin, 23,4 Gew.-% m-Xylilendiamin, 9,0 Gew.-% Polyetheramin, 8,0 Gew.-% 4,4'-isopropylidenediphenol, 2,4 Ges.-% p-tert-Butylphenol, 9,0 Gew.-% Trimethylhexamethylendiamin, 4,0 Gew.-% adduktierter epoxidgruppenhaltiger Ester und 0,2 Gew.-% Benetzungsadditiv enthält.

26. Beschichtung nach Anspruch 23, **dadurch gekennzeichnet, dass** die Füllstoffe der ersten Lage ausschließlich aus Quarzmehl und/oder einem Gemisch aus Quarzmehl mit Magnesiumsilikat, Chlorit-Quarz-Glimmer, Magnesiumaluminiumsilikat und Titandioxid und/oder
einem Gemisch bestehen, wobei der Anteil des Quarzmehls an der Füllstoffmenge in der Haftbrücke maximal 80% und der Anteil des Magnesiumssilikats maximal 30% beträgt.

27. Beschichtung nach Anspruch 23, **dadurch gekennzeichnet, dass** die Füllstoffe der zweiten Lage ausschließlich aus Quarzmehl und/oder einem Gemisch aus Quarzmehl mit Magnesiumsilikat, Chlorit-Quarz-Glimmer und Magnesiumaluminiumsilikat bestehen, wobei der Anteil des Quarzmehls an der Füllstoffmenge in der Siegelschicht maximal 50% und der Anteil des Magnesiumsilikats maximal 30% beträgt.

28. Beschichtung nach Anspruch 23, **dadurch gekennzeichnet, dass** das Mischungsverhältnis von Komponente C zu Komponente D zwischen 2 : 1 und 8 : 1 Volumenteilen liegt.

29. Beschichtung nach Anspruch, 23, **dadurch gekennzeichnet, dass** die Additive lösemittel- und wasserfrei sind.

## Claims

1. A method for protecting surfaces, for example exhaust air ducts, which are made from sheets of steel, aluminium or copper or sheets of the alloys thereof or plastics or the like and are exposed to dynamic loads of abrasive solids, aggressive vapours and condensates, in which a solvent-free mixture of epoxy resin based on bisphenol A and bisphenol F, glycidyl ether as reactive diluent, a curing agent based on an amine addition product prepared from a polyamine and/or from basic amines with primary, secondary and tertiary amino groups, fillers and additives is applied by filler knife, brush, roller or sprayer and is caused to react at at least 15°C to 20°C, **characterised by** the following steps:
a) application of a single layer of the mixture in thicknesses of between 250 and 600 µm onto an unprepared surface provided with a film of oil,
b) absorption of the constituents of the oil by the mixture,
c) reaction of the mixture with the constituents of the oil to form a single-layer, abrasion-resistant, chemically resistant and electrically puncture-proof protective system which can be exposed to dynamic loads and has an adhesive strength to the surface of at least 7.0 to 11.0 N/mm².

2. A method according to claim 1, **characterised in that** a mixture of 1.0 to 70.0 wt.% of epoxy resin, 1 to 50 wt.% of reactive diluent, 3.0 to 70.0 wt.% of filler and 0.1 to 5.0 wt.% of additives is used as component A and 5.0 to 99 wt.% of curing agent and 0.1 to 5.0 wt.% of additives is used as component B.

3. A method according to claim 2, **characterised in that** 1.0 to 50.0 wt.% of bisphenol A-(epichlorohydrin) with an average molecular weight of ≤ 700, 1.0 to 50.0 wt.% of bisphenol F-(epichlorohydrin) with an average molecular weight of ≤ 700, 0.1 to 10.0 wt.% of epoxy resin (A/F) addition product with phenolic resin, 1.0 to 29.0 wt.% of 6-hexanediol diglycidyl ether, 1.0 to 20.0 wt.% of p-tert-butylphenol glycidyl ether, 1.0 to 20.0 wt.% of polypropylene glycol diglycidyl ether, 5.0 to 70.0 wt.% of filler and 0.1 to 5.0 wt.% of additives are used as component A.

4. A method according to claim 2, **characterised in that** 1.0 to 29.0 wt.% of benzyl alcohol, 1.0 to 29.0 wt.% of isophoronediamine, 0.1 to 5.0 wt.% of 3,6-diazaoctamethylenediamine, 0.1 to 5.0 wt.% of 4,4'-isopropylidenediphenol, 0.1 to 5.0 wt.% of 2-piperazin-1-ylethylamine, 0.1 to 5.0 wt.% of polyaminoamide, 0.1 to 5.0 wt.% of p-tert-butylphenol, 0.1 to 10.0 wt.% of salicylic acid, and 0.1 to 5.0 wt.% of additives are used as component B.

5. A method according to claims 1 to 4, **characterised in that** solely quartz and/or a mixture of silica flour, magnesium silicate, chlorite-quartz-mica, magnesium aluminium silicate and titanium dioxide is used as filler, wherein the proportion of silica flour in the quantity of filler amounts to at most 65% and the proportion magnesium silicate in the quantity of filler amounts to at most 22%.

6. A method according to claims 1 to 5, **characterised in that** a mixing ratio of component A to component B of 1:1 to 5:1 parts by volume is established.

7. A method according to claims 1 to 5, **characterised in that** additives which are largely solvent-free and anhydrous are used.

8. A method for protecting surfaces, for example exhaust air ducts, which are made from sheets of steel, aluminium or copper or sheets of the alloys thereof or plastics or the like and are exposed to dynamic loads of abrasive solids, aggressive vapours and condensates, in which a solvent-free mixture of epoxy resin based on bisphenol A and bisphenol F, glycidyl ether as reactive diluent, a curing agent based on an amine addition product prepared from a polyamine and/or from basic amines with primary, secondary and tertiary amino groups, fillers and additives is applied by filler knife, brush, roller or sprayer and is caused to react at at least 15°C to 20°C, **characterised by** the following steps:
a) application of a first layer of a first mixture with a film thickness of 250 µm to 350 µm onto an unprepared surface provided with an oil film,
b) absorption of the constituents of the oil into the mixture of the first layer,
c) formation of a resilient bonding bridge by reaction of the first mixture with the constituents of the oil to form a first protective system with an adhesive strength onto the surface of at least 7.0 to 11.0 N/mm²,
d) application of a second layer of a second mixture in a film thickness of 100 µm to 250 µm onto the first layer according to step a) and
e) reaction of the mixture of the second layer to form a second protective system as an abrasion-resistant, chemically resistant and electrically puncture-proof sealing layer which can be exposed to dynamic loads.

9. A method according to claim 8, **characterised in that**, for the first layer, 5.0 to 60 wt.% of epoxy resin, 1.0 to 25.0 wt.% of reactive diluent, 5.0 to 80.0 wt.% of fillers and 0.1 to 5.0 wt.% of additives are used as component C and 10.0 to 95.0 wt.% of curing agent, 1.0 to 50.0 wt.% of fillers and 0.1 to 5.0 wt.% of additives are used as component D, relative to the finished bonding bridge.

10. A method according to claim 8, **characterised in that** 5.0 to 90.0 wt.% of epoxy resin, 1.0 to 50.0 wt.% of reactive diluent, up to 50.0 wt.% of fillers and 0.1 to 5.0 wt.% of additives are used as component C and 10.0 to 50.0 wt.% of curing agent, up to 50.0 wt.% of fillers and 0.1 to 5.0 wt.% of additives are used as component D, relative to the finished bonding bridge.

11. A method according to claim 10, **characterised in that**, for the second layer, 55 wt.% of bisphenol A-(epichlorohydrin) with an average molecular weight of ≤ 700, 24.0 wt.% of bisphenol F-(epichlorohydrin) with an average molecular weight of ≤ 700, 4.9 wt.% of glycidyl ether, 12.0 wt.% of p-tert-butylphenol glycidyl ether, 3.0 wt.% of polypropylene glycol diglycidyl ether, 0.2 wt.% of silicone-free foam-breaking polymers, 0.6 wt.% of polyether-modified copolymer and 0.3 wt.% of wetting additive are used as component C.

12. A method according to claim 10, **characterised in that** 14.0 wt.% of benzyl alcohol, 20.0 wt.% of isophoronediamine, 8.0 wt.% of 3,6-diazaoctamethylenediamine, 23.4 wt.% of m-xylylenediamine, 9.0 wt.% of polyetheramine, 8.0 wt.% of 4,4'-isopropylidenediphenol, 2.4 wt.% of p-tert-butylphenol, 9.0 wt.% of trimethylhexamethylenediamine, 4.0 wt.% of esters containing epoxy groups and having undergone an addition reaction and 0.2 wt.% of wetting additive are used as component D.

13. A method according to claims 8 to 10, **characterised in that** solely silica flour and/or a mixture of silica flour with magnesium silicate, chlorite-quartz-mica, magnesium aluminium silicate and titanium dioxide is used as fillers in the first layer, wherein the proportion of silica flour in the quantity of filler in the bonding bridge amounts to at most 80% and the proportion of magnesium silicate to at most 30%.

14. A method according to claims 8 to 10, **characterised in that** solely silica flour and/or a mixture of silica flour with magnesium silicate, chlorite-quartz-mica and magnesium aluminium silicate is used as fillers for the second layer, wherein the proportion of silica flour in the quantity of filler in the sealing layer amounts to at most 50% and the proportion of magnesium silicate to at most 30%.

15. A method according to claims 8 to 14, **characterised in that** a mixing ratio of component C to component D of between 2:1 and 8:1 parts by volume is established.

16. A method according to claims 8 to 12, **characterised in that** additives which are largely solvent-free and anhydrous are used.

17. A coating for surfaces, for example exhaust air ducts, which are made from sheets of steel, aluminium or copper or sheets of the alloys thereof or plastics or the like and are exposed to dynamic loads of abrasive solids, aggressive vapours and condensates having a mixture, applied by filler knife, brush, roller or sprayer onto an unprepared metal surface provided with a film of oil, of epoxy resin based on bisphenol A and bisphenol F, glycidyl ether as reactive diluent, a curing agent based on an amine addition product prepared from a polyamine and/or from basic amines with primary, secondary and tertiary amino groups, fillers and additives, **characterised in that** the coating consists of a layer, which binds the constituents of the oil of the oil film, of 1.0 to 70.0 wt.% of epoxy resin, 1 to 50 wt.% of reactive diluent, 3.0 to 70.0 wt.% of filler and 0.1 to 5.0 wt.% of additives as component A and 5.0 to 99 wt.% of curing agent and 0.1 to 5.0 wt.% of additives as component B.

18. A coating according to claim 17, **characterised in that** component A contains 1.0 to 50.0 wt.% of bisphenol A-(epichlorohydrin) with an average molecular weight of ≤ 700, 1.0 to 50.0 wt.% of bisphenol F-(epichlorohydrin) with an average molecular weight of ≤ 700, 0.1 to 10.0 wt.% of epoxy resin (A/F) addition product with phenolic resin, 1.0 to 29.0 wt.% of 6-hexanediol diglycidyl ether, 1.0 to 20.0 wt.% of p-tert-butylphenol glycidyl ether, 1.0 to 20.0 wt.% of polypropylene glycol diglycidyl ether, 5.0 to 70.0 wt.% of filler and 0.1 to 5.0 wt. % of additives.

19. A coating according to claim 17, **characterised in that** component B contains 1.0 to 29.0 wt.% of benzyl alcohol, 1.0 to 29.0 wt.% of isophoronediamine, 0.1 to 5.0 wt.% of 3,6-diazaoctamethylenediamine, 0.1 to 5.0 wt.% of 4,4'-isopropylidenediphenol, 0.1 to 5.0 wt.% of 2-piperazin-1-ylethylamine, 0.1 to 5.0 wt.% of polyaminoamide, 0.1 to 5.0 of p-tert-butylphenol, 0.1 to 10.0 wt.% of salicylic acid, and 0.1 to 5.0 wt.% of additives.

20. A coating according to claims 17 to 19, **characterised in that** the filler solely consists of quartz and/or a mixture of silica flour, magnesium silicate, chlorite-quartz-mica, magnesium aluminium silicate and titanium dioxide, wherein the proportion of silica flour in the quantity of filler amounts to at most 65% and the proportion magnesium silicate in the quantity of filler amounts to at most 22%.

21. A coating according to claims 17 to 19, **characterised in that** the additives are largely solvent-free and anhydrous.

22. A coating according to claims 17 to 19, **characterised in that** the additives are largely solvent-free and anhydrous.

23. A coating for surfaces, for example exhaust air ducts, which are made from sheets of steel, aluminium or copper or sheets of the alloys thereof or plastics or the like and are exposed to dynamic loads of abrasive solids, aggressive vapours and condensates having a mixture applied by filler knife, brush, roller or sprayer onto a lightly oiled, unprepared metal surface of epoxy resin based on bisphenol A and bisphenol F, glycidyl ether as reactive diluent, a curing agent based on an amine addition product prepared from a polyamine and/or from basic amines with primary, secondary and tertiary amino groups, fillers and additives, **characterised in that** the coating comprises at least two layers, of which the first layer is formed as a resilient bonding bridge, which binds the constituents of the oil layer, as first protective system prepared from 5.0 to 60 wt.% of epoxy resin, 1.0 to 25.0 wt.% of reactive diluent, 5.0 to 80.0 wt.% of fillers and 0.1 to 5.0 wt.% of additives as component C and 10.0 to 95.0 wt.% of curing agent, 1.0 to 50.0 wt.% of fillers and 0.1 to 5.0 wt.% of additives as component D, relative to the finished bonding bridge, and the second layer is formed in the form of a sealing layer as second protective system prepared from 5.0 to 90.0 wt.% of epoxy resin, 1.0 to 50.0 wt.% of reactive diluent, up to 50.0 wt.% fillers and 0.1 to 5.0 wt.% of additives as component C and 10.0 to 50.0 wt.% of curing agent, up to 50.0 wt.% of fillers and 0.1 to 5.0 wt.% of additives as component D, relative to the finished sealing layer.

24. A coating according to claim 23, **characterised in that** component C contains 55 wt.% of bisphenol A-(epichlorohydrin) with an average molecular weight of ≤ 700, 24.0 wt.% of bisphenol F-(epichlorohydrin) with an average molecular weight of ≤ 700, 4.9 wt.% of glycidyl ether, 12.0 wt.% of p-tert-butylphenol glycidyl ether, 3.0 wt.% of polypropylene glycol diglycidyl ether, 0.2 wt.% of silicone-free foam-breaking polymers, 0.6 wt.% of polyether-modified copolymer and 0.3 wt.% of wetting additive.

25. A coating according to claim 23, **characterised in that** component D contains 14.0 wt.% of benzyl alcohol, 20.0 wt.% of isophoronediamine, 8.0 wt.% of 3,6-diazaoctamethylenediamine, 23.4 wt.% of m-xylylenediamine, 9.0 wt.% of polyetheramine, 8.0 wt.% of 4,4'-isopropylidenediphenol, 2.4 wt.% of p-tert-butylphenol, 9.0 wt.% of trimethylhexamethylenediamine, 4.0 wt.% of esters containing epoxy groups and having undergone an addition reaction and 0.2 wt.% of wetting additive.

26. A coating according to claim 23, **characterised in that** the fillers in the first layer solely consist of silica flour and/or a mixture of silica flour with magnesium silicate, chlorite-quartz-mica, magnesium aluminium silicate and titanium dioxide, wherein the proportion of silica flour in the quantity of filler in the bonding bridge amounts to at most 80% and the proportion of magnesium silicate to at most 30%.

27. A coating according to claim 23, **characterised in that** the fillers in the second layer solely consist of silica flour and/or a mixture of silica flour with magnesium silicate, chlorite-quartz-mica and magnesium aluminium silicate, wherein the proportion of silica flour in the quantity of filler in the sealing layer amounts to at most 50% and the proportion of magnesium silicate to at most 30%.

28. A coating according to claim 23, **characterised in that** the mixing ratio of component C to component D amounts to between 2:1 and 8:1 parts by volume.

29. A coating according to claims 23, **characterised in that** the additives are solvent-free and anhydrous.

## Revendications

1. Procédé pour la protection de surfaces réalisées à partir d'une tôle d'acier, d'aluminium ou de cuivre ou d'une tôle réalisée à partir d'alliages de ces derniers, d'une matière synthétique ou analogue, par exemple des canaux pour l'air résiduaire, sollicitées de manière dynamique avec des substances solides abrasives, des vapeurs et des condensats agressifs, dans lequel on applique sur la surface à l'aide d'une spatule, par enduction, au rouleau ou par pulvérisation un mélange, exempt de solvants, d'une résine époxyde à base de bisphénol A et de bisphénol F, d'éther glycidylique, à titre de diluant réactif, d'un agent de durcissement à base d'un adduit d'amine que l'on obtient à partir d'une polyamine et/ou à partir d'amines de base comprenant des groupes amino primaires, secondaires et tertiaires, de substances de remplissage et d'additifs, et on l'amène à réagir à une température d'au moins 15 °C à 20 °C, **caractérisé par** les étapes suivantes dans lesquelles :
a) on applique une couche unique du mélange pour obtenir des épaisseurs entre 250 et 600 µm sur une surface non préparée munie d'un film d'huile ;
b) on fait en sorte que le mélange absorbe les constituants de l'huile ;
c) on fait réagir le mélange avec les constituants de l'huile pour obtenir un système de protection monocouche qui peut être sollicité de manière dynamique, qui résiste à l'abrasion, qui est capable de résister aux produits chimiques et qui résiste au claquage électrique, possédant une adhésivité d'au moins 7,0 à 11,0 N/mm² sur la surface.

2. Procédé selon la revendication 1, **caractérisé en ce qu'**on utilise un mélange de 1,0 à 70,0 % en poids d'une résine époxyde, de 1 à 50 % en poids d'un diluant réactif, de 3,0 à 70,0 % en poids d'une substance de remplissage et de 0,1 à 5,0 % en poids d'additifs, à titre de composant A, et de 5,0 à 99 % en poids d'un agent de durcissement et de 0,1 à 5,0 % en poids d'additifs, à titre de composant B.

3. Procédé selon la revendication 2, **caractérisé en ce qu'**on utilise, à titre de composant A, de 1,0 à 50,0 % en poids de bisphénol A (épichlorhydrine) possédant un poids moléculaire moyen inférieur ou égal à 700, de 1,0 à 50,0 % en poids de bisphénol F (épichlorhydrine) possédant un poids moléculaire moyen inférieur ou égal à 700, de 0,1 à 10,0 % en poids d'un adduit de résine époxyde (A/F) avec une résine phénolique, de 1,0 à 29,0 % en poids d'éther diglycidylique de 6-hexanediol, de 1,0 à 20,0 % en poids d'éther glycidylique de p-tert-butylphénol, de 1,0 à 20,0 % en poids d'éther diglycidylique de polypropylèneglycol, de 5,0 à 70,0 % en poids d'une matière de remplissage et de 0,1 à 5,0 % en poids d'additifs.

4. Procédé selon la revendication 2, **caractérisé en ce qu'**on utilise, à titre de composant B, de 1,0 à 29,0 % en poids d'alcool benzylique, de 1,0 à 29,0 % en poids d'isophoronediamine, de 0,1 à 5,0 % en poids de la 3,6-diazaoctaméthylènediamine, de 0,1 à 5,0 % en poids du 4,4'-isopropylidènediphénol, de 0,1 à 5,0 % en poids de la 2-pipérazin-1-yléthylamine, de 0,1 à 5,0 % en poids de polyaminoamide, de 0,1 à 5,0 % en poids du p-tert-butylphénol, de 0,1 à 10,0 % en poids d'acide salicylique et de 0,1 à 5,0 % en poids d'additifs.

5. Procédé selon les revendications 1 à 4, **caractérisé en ce qu'**on utilise, à titre de substance de remplissage, de manière exclusive du quartz et/ou un mélange de farine de quartz, de silicate de magnésium, de quartz-mica à chlorite, de silicate de magnésium-aluminium et de dioxyde de titane, la fraction quantitative de la substance de remplissage correspondant à la farine de quartz s'élevant au maximum à 65 % et la fraction quantitative de la substance de remplissage correspondant au silicate de magnésium s'élevant au maximum à 22 %.

6. Procédé selon les revendications 1 à 5, **caractérisé en ce qu'**on règle un rapport de mélange du composant A au composant B entre 1 : 1 et 5 : 1 en fractions volumiques.

7. Procédé selon les revendications 1 à 5, **caractérisé en ce qu'**on utilise dans une large mesure des additifs exempts de solvants et anhydres.

8. Procédé pour la protection de surfaces réalisées à partir d'une tôle d'acier, d'aluminium ou de cuivre ou d'une tôle réalisée à partir d'alliages de ces derniers, d'une matière synthétique ou analogue, par exemple des canaux pour l'air résiduaire, sollicitées de manière dynamique avec des substances solides abrasives, des vapeurs et des condensats agressifs, dans lequel on applique sur la surface à l'aide d'une spatule, par enduction, au rouleau ou par pulvérisation, un mélange, exempt de solvants, d'une résine époxyde à base de bisphénol A et de bisphénol F, d'éther glycidylique, à titre de diluant réactif, d'un agent de durcissement à base d'un adduit d'amine que l'on obtient à partir d'une polyamine et/ou à partir d'amines de base comprenant des groupes amino primaires, secondaires et tertiaires, de substances de remplissage et d'additifs, et on l'amène à réagir à une température d'au moins 15 °C à 20 °C, **caractérisé par** les étapes suivantes dans lesquelles :
a) on applique une première couche d'un premier mélange pour obtenir des épaisseurs entre 250 et 350 µm sur une surface non préparée munie d'un film d'huile ;
b) on fait en sorte que le mélange de la première couche absorbe les constituants de l'huile ;
c) on réalise un pont d'adhérence élastique via la réaction du premier mélange avec les constituants de l'huile pour obtenir un premier système de protection possédant une adhésivité d'au moins 7,0 à 11,0 N/mm² sur la surface ;
d) on applique une deuxième couche d'un deuxième mélange pour obtenir une épaisseur de couche de 100 µm à 250 µm sur la première couche conformément à l'étape a) ; et
e) on fait réagir le mélange de la deuxième couche pour obtenir un deuxième système de protection sous la forme d'une couche de scellement qui peut être sollicitée de manière dynamique, qui résiste à l'abrasion, qui est capable de résister aux produits chimiques et qui résiste au claquage électrique.

9. Procédé selon la revendication 8, **caractérisé en ce qu'**on utilise, pour la première couche, de 5,0 à 60,0 % en poids d'une résine époxyde, de 1,0 à 25,0 % en poids d'un diluant réactif, de 5,0 à 80,0 % en poids de substances de remplissage et de 0,1 à 5,0 % en poids d'additifs, à titre de composant C, et de 10,0 à 95,0 % en poids d'un agent de durcissement, de 1,0 à 50,0 % en poids de substances de remplissage et de 0,1 à 5,0 % en poids d'additifs, à titre de composant D, rapportés au pont d'adhérence prêt à l'emploi.

10. Procédé selon la revendication 8, **caractérisé en ce qu'**on utilise, pour la deuxième couche, de 5,0 à 90,0 % en poids d'une résine époxyde, de 1,0 à 50,0 % en poids d'un diluant réactif, jusqu'à 50,0 % en poids de substances de remplissage et de 0,1 à 5,0 % en poids d'additifs, à titre de composant C, et de 10,0 à 50,0 % en poids d'un agent de durcissement, jusqu'à 50,0 % en poids d'une substance de remplissage et de 0,1 à 5,0 % en poids d'additifs, à titre de composant D, rapportés à la couche de scellement prête à l'emploi.

11. Procédé selon la revendication 10, **caractérisé en ce qu'**on utilise, à titre de composant C, 55 % en poids de bisphénol A (épichlorhydrine) possédant un poids moléculaire moyen inférieur ou égal à 700, 24,0 % en poids de bisphénol F (épichlorhydrine) possédant un poids moléculaire moyen inférieur ou égal à 700, 4,9 % en poids d'éther glycidylique, 12,0 % en poids d'éther glycidylique de p-tert-butylphénol, 3,0 % en poids d'éther diglycidylique de polypropylèneglycol, 0,2 % en poids de polymères antimousse exempts de silicone, 0,6 % en poids d'un copolymère modifié par un polyéther et 0,3 % en poids d'un additif de mouillage.

12. Procédé selon la revendication 10, **caractérisé en ce qu'**on utilise, à titre de composant D, 14,0 % en poids d'alcool benzylique, 20,0 % en poids d'isophoronediamine, 8,0 % en poids de la 3,6-diazaoctaméthylènediamine, 23,4 % en poids de la m-xylylènediamine, 9,0 % en poids de polyétheramine, 8,0 % en poids du 4,4'-isopropylidènediphénol, 2,4 % en poids du p-tert-butylphénol, 9,0 % en poids de la triméthylhexaméthylènediamine, 4,0 % en poids d'esters contenant des groupes époxyde sous la forme d'adduits et 0,2 % en poids d'un additif de mouillage.

13. Procédé selon les revendications 8 à 10, **caractérisé en ce qu'**on utilise, à titre de substances de remplissage de la première couche, de manière exclusive de la farine de quartz et/ou un mélange de farine de quartz avec du silicate de magnésium, du quartz-mica à chlorite, du silicate de magnésium-aluminium et du dioxyde de titane, la fraction quantitative de la substance de remplissage correspondant à la farine de quartz dans le pont d'adhérence s'élevant au maximum à 80 % et la fraction quantitative de la substance de remplissage correspondant au silicate de magnésium s'élevant au maximum à 30 %.

14. Procédé selon les revendications 8 à 10, **caractérisé en ce qu'**on utilise, à titre de substances de remplissage de la deuxième couche, de manière exclusive de la farine de quartz et/ou un mélange de farine de quartz avec du silicate de magnésium, du quartz-mica à chlorite et du silicate de magnésium-aluminium, la fraction quantitative de la substance de remplissage correspondant à la farine de quartz dans la couche de scellement s'élevant au maximum à 50 % et la fraction du silicate de magnésium s'élevant au maximum à 30%.

15. Procédé selon les revendications 8 à 14, **caractérisé en ce qu'**on règle le rapport de mélange du composant C au composant D entre 2 : 1 et 8 : 1 en fractions volumiques.

16. Procédé selon les revendications 8 à 12, **caractérisé en ce qu'**on utilise dans une large mesure des additifs exempts de solvants et anhydres.

17. Enduction pour des surfaces réalisées à partir d'une tôle d'acier, d'aluminium ou de cuivre ou d'une tôle réalisée à partir d'alliages de ces derniers, d'une matière synthétique ou analogue, par exemple des canaux pour l'air résiduaire, sollicitées de manière dynamique avec des substances solides abrasives, des vapeurs et des condensats agressifs, avec un mélange appliqué à l'aide d'une spatule, par enduction, au rouleau ou par pulvérisation sur une surface métallique non préparée munie d'un film d'huile, que l'on obtient à partir d'une résine époxyde à base de bisphénol A et de bisphénol F, d'éther glycidylique, à titre de diluant réactif, d'un agent de durcissement à base d'un adduit d'amine que l'on obtient à partir d'une polyamine et/ou à partir d'amines de base comprenant des groupes amino primaires, secondaires et tertiaires, de substances de remplissage et d'additifs, **caractérisée en ce que** l'enduction est constituée d'une couche liant les constituants de l'huile du film d'huile, que l'on obtient à partir de 1,0 à 70,0 % en poids d'une résine époxyde, de 1 à 50 % en poids d'un diluant réactif, de 3,0 à 70,0 % en poids d'une substance de remplissage et de 0,1 à 5,0 % en poids d'additifs, à titre de composant A, et de 5,0 à 99 % en poids d'un agent de durcissement et de 0,1 à 5,0 % en poids d'additifs, à titre de composant B.

18. Enduction selon la revendication 17, **caractérisée en ce que** le composant A contient de 1,0 à 50,0 % en poids de bisphénol A (épichlorhydrine) possédant un poids moléculaire moyen inférieur ou égal à 700, de 1,0 à 50,0 % en poids de bisphénol F (épichlorhydrine) possédant un poids moléculaire moyen inférieur ou égal à 700, de 0,1 à 10,0 % en poids d'un adduit de résine époxyde (A/F) avec une résine phénolique, de 1,0 à 29,0 % en poids d'éther diglycidylique de 6-hexanediol, de 1,0 à 20,0 % en poids d'éther glycidylique de p-tert-butylphénol, de 1,0 à 20,0 % en poids d'éther diglycidylique de polypropylèneglycol, de 5,0 à 70,0 % en poids d'une matière de remplissage et de 0,1 à 5,0 % en poids d'additifs.

19. Enduction selon la revendication 17, **caractérisée en ce que** le composant B contient de 1,0 à 29,0 % en poids d'alcool benzylique, de 1,0 à 29,0 % en poids d'isophoronediamine, de 0,1 à 5,0 % en poids de la 3,6-diazaoctaméthylènediamine, de 0,1 à 5,0 % en poids du 4,4'-isopropylidènediphénol, de 0,1 à 5,0 % en poids de la 2-pipérazin-1-yléthylamine, de 0,1 à 5,0 % en poids de polyaminoamide, de 0,1 à 5,0 % en poids du p-tert-butylphénol, de 0,1 à 10,0 % en poids d'acide salicylique et de 0,1 à 5,0 % en poids d'additifs.

20. Enduction selon les revendications 17 à 19, **caractérisée en ce que** la substance de remplissage est constituée, de manière exclusive de quartz et/ou d'un mélange de farine de quartz, de silicate de magnésium, de quartz-mica à chlorite, de silicate de magnésium-aluminium et de dioxyde de titane, la fraction quantitative de la substance de remplissage correspondant à la farine de quartz s'élevant au maximum à 65 % et la fraction quantitative de la substance de remplissage correspondant au silicate de magnésium s'élevant au maximum à 22 %.

21. Enduction selon les revendications 17 à 19, **caractérisée en ce que** les additifs sont dans une large mesure exempts de solvants et anhydres.

22. Enduction selon les revendications 17 à 19, **caractérisée en ce que** les additifs sont dans une large mesure exempts de solvants et exempts d'eau.

23. Enduction pour des surfaces réalisées à partir d'une tôle d'acier, d'aluminium ou de cuivre ou d'une tôle réalisée à partir d'alliages de ces derniers, d'une matière synthétique ou analogue, par exemple des canaux pour l'air résiduaire, sollicitées de manière dynamique avec des substances solides abrasives, des vapeurs et des condensats agressifs, comprenant un mélange appliqué sur une surface métallique non préparée légèrement huilée à l'aide d'une spatule, par enduction, au rouleau ou par pulvérisation, que l'on obtient à partir d'une résine époxyde à base de bisphénol A et de bisphénol F, d'éther glycidylique, à titre de diluant réactif, d'un agent de durcissement à base d'un adduit d'amine que l'on obtient à partir d'une polyamine et/ou à partir d'amines de base comprenant des groupes amino primaires, secondaires et tertiaires, de substances de remplissage et d'additifs, **caractérisée en ce que** l'enduction comprend au moins deux couches, la première couche prenant la forme d'un pont d'adhérence élastique liant les constituants de la couche d'huile, à titre de premier système de protection, que l'on obtient à partir de 5,0 à 60,0 % en poids d'une résine époxyde, de 1,0 à 25,0 % en poids d'un diluant réactif, de 5,0 à 80,0 % en poids de substances de remplissage et de 0,1 à 5,0 % en poids d'additifs, à titre de composant C, et de 10,0 à 95,0 % en poids d'un agent de durcissement, de 1,0 à 50,0 % en poids de substances de remplissage et de 0,1 à 5,0 % en poids d'additifs, à titre de composant D, rapportés au pont d'adhérence prêt à l'emploi, et la deuxième couche prenant la forme d'une couche de scellement, à titre de deuxième système de protection, que l'on obtient à partir de 5,0 à 90,0 % en poids d'une résine époxyde, de 1,0 à 50,0 % en poids d'un diluant réactif, jusqu'à 50,0 % en poids de substances de remplissage et de 0,1 à 5,0 % en poids d'additifs, à titre de composant C, et de 10,0 à 50,0 % en poids d'un agent de durcissement, jusqu'à 50,0 % en poids de substances de remplissage et de 0,1 à 5,0 % en poids d'additifs, à titre de composant D, rapportés à la couche de scellement prête à l'emploi.

24. Enduction selon la revendication 23, **caractérisée en ce que** le composant C contient 55 % en poids de bisphénol A (épichlorhydrine) possédant un poids moléculaire moyen inférieur ou égal à 700, 24,0 % en poids de bisphénol F (épichlorhydrine) possédant un poids moléculaire moyen inférieur ou égal à 700, 4,9 % en poids d'éther glycidylique, 12,0 % en poids d'éther glycidylique de p-tert-butylphénol, 3,0 % en poids d'éther diglycidylique de polypropylèneglycol, 0,2 % en poids de polymères antimousse exempts de silicone, 0,6 % en poids d'un copolymère modifié par un polyéther et 0,3 % en poids d'un additif de mouillage.

25. Enduction selon la revendication 23, **caractérisée en ce que** le composant D contient 14,0 % en poids d'alcool benzylique, 20,0 % en poids d'isophoronediamine, 8,0 % en poids de la 3,6-diazaoctaméthylènediamine, 23,4 % en poids de la m-xylylènediamine, 9,0 % en poids de polyétheramine, 8,0 % en poids du 4,4'-isopropylidènediphénol, 2,4 % en poids du p-tert-butylphénol, 9,0 % en poids de la triméthylhexaméthylènediamine, 4,0 % en poids d'esters contenant des groupes époxyde sous la forme d'adduits et 0,2 % en poids d'un additif de mouillage.

26. Enduction selon la revendication 23, **caractérisée en ce que** les substances de remplissage de la première couche sont constituées, de manière exclusive de farine de quartz et/ou d'un mélange de farine de quartz avec du silicate de magnésium, du quartz-mica à chlorite, du silicate de magnésium-aluminium et du dioxyde de titane, la fraction quantitative de la substance de remplissage correspondant à la farine de quartz dans le pont d'adhérence s'élevant au maximum à 80 % et la fraction du silicate de magnésium s'élevant au maximum à 30 %.

27. Enduction selon la revendication 23, **caractérisée en ce que** les substances de remplissage de la deuxième couche sont constituées, de manière exclusive de farine de quartz et/ou d'un mélange de farine de quartz avec du silicate de magnésium, du quartz-mica à chlorite et du silicate de magnésium-aluminium, la fraction quantitative de la substance de remplissage correspondant à la farine de quartz dans la couche de scellement s'élevant au maximum à 50 % et la fraction du silicate de magnésium s'élevant au maximum à 30%.

28. Enduction selon la revendication 23, **caractérisée en ce que** le rapport de mélange du composant C au composant D se situe entre 2 : 1 et 8 : 1 en fractions volumiques.

29. Enduction selon la revendication 23, **caractérisée en ce que** les additifs sont exempts de solvants et sont anhydres.
